# EUROPÄISCHE PATENTSCHRIFT

(11) **EP 2 216 232 B1**
(45) Veröffentlichungstag und Bekanntmachung des Hinweises auf die Patenterteilung: **13.04.2011**
(21) Anmeldenummer: 10151794.4
(22) Anmeldetag: 27.01.2010
(51) Int. Cl.: B62C 5/02

(54) **Motorkutschengespann und entsprechendes Zugfahrzeug**
Motor coach set and corresponding train vehicle
Ensemble carrosse de moteur et véhicule de traction correspondant

(30) Priorität: 06.02.2009 DE 102009000686
(43) Veröffentlichungstag der Anmeldung: 11.08.2010
(73) Patentinhaber: AAGLAND Manufaktur Schloss Kühlenfels GmbH, 91278 Pottenstein (DE)
(72) Erfinder: Belz, Roland, 91278, Pottenstein (DE)
(74) Vertreter: Skuhra, Udo

(56) Entgegenhaltungen:
- WO-A1-84/02888
- DE-U1-202004 016 528

## Beschreibung

Die Erfindung bezieht sich auf ein Motorkutschengespann mit einem Zugfahrzeug, welches eine lenkbare Vorderachse und eine Antriebsachse mit zumindest einem Antrieb aufweist, und einem mit dem Zugfahrzeug gekoppelten Kutschanhänger mit zumindest einer Anhängerachse. Die Erfindung betrifft auch ein entsprechendes Zugfahrzeug.

Im Zuge des so genannten Retro-Designs werden Kutschen orignialgetreu nachgebaut. Kutschen sind Wagen, welche üblicherweise von Zugtieren, insbesondere Pferden, gezogen werden. Die Haltung und Ausbildung von geeigneten Zugpferden erfordert einen großen Einsatz von Zeit und Personal sowie damit einhergehende Kosten. Weiterhin ist zum sicheren Betrieb einer Kutsche mit Pferden ein sicheres Führen und Beherrschen dieser Pferde unabdingbar.

Eine mit Motorkraft betriebene Kutsche mit einer fest gelagerten Vorderachse mit Achsschenkeln und mit einer Hinterachse ist in der DE 20 2004 016 528 U1 beschrieben welche alle Merkmale des Oberbegriffs des Anprunchs 1 offenbart. An jedem freien Ende jeder Achse ist zumindest ein Laufrad mit Achsscherikellenkung drehbar gelagert. Ein Elektro- oder Verbrennungsmotor dient als Antrieb für zumindest eine der zwei Achsen der Kutsche.

Viele Kutschentypen sind nur verbunden mit einem großen Aufwand mit einem Motorantrieb ausrüstbar oder eignen sich auf Grund ihrer beizubehaltenden Konstruktion nicht für eine Motomachrüstung. Einachsige Kutschen, beispielsweise ein Gig oder Hansom Cab, können nicht mit einem Antrieb versehen werden.

Es ist daher die Aufgabe der vorliegenden Erfindung, ein Motorkutschengespann bereitzustellen, welches die obigen Nachteile nicht mehr aufweist bzw. bei welchem sie in einem erheblichen Maß reduziert sind, und welches weitere Vorteile schafft.

Eine weitere Aufgabe besteht darin, ein entsprechendes Zugfahrzeug bereitzustellen.

Erfindungsgemäß wird diese Aufgabe durch ein Motorkutschengespann mit den Merkmalen des Anspruchs 1 gelöst.

Die Erfindung schafft ein Motorkutschengespann mit einem Zugfahrzeug, welches eine lenkbare Vorderachse und eine Antriebsachse mit zumindest einem Antrieb aufweist, und einem mit dem

Zugfahrzeug gekoppelten Kutschanhänger mit zumindest einer Anhängerachse. Das Motorkutschengespann ist dadurch gekennzeichnet, dass der Kutschanhänger mit dem Zugfahrzeug durch zumindest zwei Zugmittel zur Kraftübertragung in Fahrtrichtung, durch zumindest ein Bremszugmittel zur Kraftübertragung in entgegen gesetzter Fahrtrichtung, und mit einer Schere, die zumindest einen Scherenholm aufweist, zur Führung gekoppelt ist.

Das Motorkutschengespann ist so ausgebildet, dass das Zugfahrzeug anstelle eines Zugpferdes in die vorhandene Schere bzw. Deichsel "eingespannt" werden kann. Lenkzugmittel sind "Zügel" zum Lenken des Zugfahrzeugs.

Die zumindest zwei Zugmittel übertragen Zugkräfte vom Zugfahrzeug auf den Kutschenanhänger zum Vorwärtsfahren, das zumindest eine Bremszugmittel überträgt Zugkräfte in entgegen gesetzter Fahrtrichtung, wie zum Beispiel beim Bremsen oder Rückwärtsfahren.

Dadurch ist es vorteilhaft möglich, einachsige Kutschanhänger mit dem Zugfahrzeug motorisiert als Gespann zu koppeln und zu fahren.

Ein erfindungsgemäßes Zugfahrzeug für Kutschen mit einer Schere oder einer Deichsel, umfasst: einen Rahmen mit einer Vorderachse und einer Hinterachse, wobei die Vorderachse oder/und die Hinterachse lenkbar ist; zumindest einen Lenker, an dessen Enden jeweils ein Lenkzugmittel angebracht ist; zumindest zwei Zugmittel, welche an dem Rahmen zur Kraftübertragung auf eine zuzuordnende Kutsche in Fahrtrichtung angebracht sind; zumindest ein Bremszugmittel zur Kraftübertragung von dem zuzuordnenden Kutschanhänger in entgegen gesetzter Fahrtrichtung; zumindest einen Kontaktabschnitt zur Zusammenwirkung mit dem zumindest einen Bremszugmittel; zumindest eine Führung zur Kopplung mit einer zuzuordnende Schere und zu deren verschiebbaren Halterung; und zumindest einen Antrieb, welcher mit zumindest einer der Achsen zum Antrieb des Zugfahrzeugs zusammenwirkt.

Somit weist die Erfindung gegenüber den eingangs genannten Ansätzen unter anderem den Vorteil auf, dass nicht nur einachsige Kutschanhänger sondern auch Kutschanhänger mit mehr als einer Achse anhängbar sind. Dadurch wird es möglich, dass originalgetreue Retro-Designs ohne Veränderung motorisiert werden können.

Unter dem Begriff "nach vorne" ist "in Fahrtrichtung vorwärts" und unter dem Begriff "nach hinten" ist "in Fahrtrichtung rückwärts" zu verstehen.

Es ist vorgesehen, dass die zumindest zwei Zugmittel über eine Spielwaage, deren Länge zumindest drei Viertel einer Breite des Kutschanhängers beträgt, am Kutschanhänger befestigt sind. Damit werden die Vorteile einer Spielwaage bei Bespannung mit Zugpferden ausgenutzt. Andererseits können Kutschanhänger mit oder ohne Spielwaage Verwendung finden.

Dabei können die zumindest zwei Zugmittel von einander in einem Abstand, welcher der Länge der Spielwaage entspricht, in etwa parallel zur Längsachse des Motorkutschengespanns angeordnet sein.

Die zumindest zwei Zugmittel können jeweils an einem Ende einer Zugtraverse an einem Rahmen des Zugfahrzeugs befestigt sein, wobei die Zugtraverse in etwa die Länge der Spielwaage aufweist. Somit kann die Breite eines Pferdes simuliert werden, bzw. vorhandene Zugmittel der anzuhängenden Kutschanhänger teilweise oder vollständig verwendet werden.

Zumindest ein Scherenholm kann in zumindest einer Führung am Zugfahrzeug verschiebbar gehalten sein. Dabei kann die zumindest eine Führung in einem Abstand zu einer Längsrichtung des Motorkutschengespanns über einen Führungsträger am Zugfahrzeug angebracht sein. Es ist möglich, dass die "Abmessungen" und Anbringungspunkte einem Zugpferd entsprechen. Dadurch wird es vorteilhaft ermöglicht, dass anstelle des Zugfahrzeugs auch ein oder mehrere Pferde - so vorhanden und gewünscht - einspannbar sind.

Die zumindest zwei Zugmittel können in einer alternativen Ausführung auch an dem Führungsträger angebracht sein, wodurch zusätzlich Befestigungspunkte entfallen.

Das zumindest eine Bremszugmittel kann an zumindest einem Scherenholm der Schere und an dem Zugfahrzeug angebracht sein. Dabei kann das zumindest eine Bremszugmittel mit einem Ende an einem Scherenholm und mit dem anderen Ende an dem anderen Scherenholm angebracht sein, wobei ein mittlerer Abschnitt des zumindest einen Bremszugmittels mit einer Stütze des Zugfahrzeugs in Kontakt steht. Diese Stütze kann teilweise von dem zumindest einen Bremszugmittel umschlungen sein, wobei in Falle von Kurvenfahrten das Bremszugmittel eine Relativbewegung zu der Stütze durch Gleiten an ihr ausführen kann. Die Stütze kann auch eine Rolle zur Reduzierung von Reibung und somit von Verschleiß des Bremszugmittels und der Stütze aufweisen.

Das Zugfahrzeug und der Kutschanhänger können eine Kopplung mit einem Sicherungsmittel, zum Beispiel eine Kette, aufweisen.

Die "Zügel" können als Lenkzugmittel ausgebildet sein, welche an einem Lenker jeweils an dessen Enden befestigt sind, der mit der lenkbaren Vorderachse des Zugfahrzeugs gekoppelt ist, wobei sich das jeweils zumindest eine Lenkzugmittel zum Kutschanhänger hin bis über dessen Mitte hinaus erstreckt. So kann ein Fahrer, der sich auf dem Kutschanhänger befindet, das Gespann lenken. Eine Steuerung des Antriebs ist über Steuermittel vorgesehen. Dies kann zum Beispiel über geeignete Schalter und/oder Betätigungshebel am Kutschanhänger erfolgen, die mit dem Antrieb elektrisch und/oder mechanisch gekoppelt sind. Es kann auch möglich sein, dass eine elektrische Steuerung über Kabel vorgesehen ist, wobei diese Kabel Bestandteil der Lenkzugmittel sein können. Dabei sind zugehörige Schalter in den Enden dieser "Zügel" angeordnet. Es ist auch möglich, dass durch bestimmte Zugmanöver oder "Hilfs- bzw. Steuerzügel" Schaltorgane am Lenker betätigbar sein können. Auch eine drahtlose Übertragung von Steuerbefehlen kann möglich sein. Es können auch Fußpedale zur Steuerung vorgesehen sein, wie zum Beispiel zum Bremsen. Auch eine Feststellbremse für den Kutschanhänger oder/und das Zugfahrzeug ist möglich. Die Fußpedale können auch verstellbar ausgeführt sein.

Die zumindest zwei Zugmittel und/oder das zumindest eine Bremszugmittel sind zweckmäßig als Gurte ausgebildet, da so auch schon vorhandenes Material verwendbar ist.

Der zumindest eine Antrieb kann ein Elektromotor und/oder ein Verbrennungsmotor mit Getriebe sein. Energiespeicher wie zum Beispiel Tank bzw. Akkumulator sind im Zugfahrzeug angeordnet. Die Getriebe können auch automatisch ausgebildet sein. Der Elektromotor kann mit einer entsprechenden Steuerung ausgerüstet sein, welche einen Betrieb ohne Getriebe ermöglicht.

In einer bevorzugten Ausführung ist das Zugfahrzeug als Dreirad ausgebildet.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Seitenansicht eines ersten Ausführungsbeispiels eines er- findungsgemäßen Motorkutschengespanns;
- Fig. 2: eine Schnittansicht gemäß Linie A-A nach Fig. 1;
- Fig. 3: eine Draufsicht des ersten Ausführungsbeispiels nach Fig. 1;
- Fig. 4: eine schematische Seitenansicht eines zweiten Ausführungsbeispiels des er- findungsgemäßen Motorkutschengespanns mit einem offenen Verdeck; und
- Fig. 5: das zweite Ausführungsbeispiel nach Fig. 4 mit einem geschlossenen Ver- deck.

In den Figuren bezeichnen dieselben Bezugszeichen gleiche oder funktionsgleiche Komponenten, soweit nichts Gegenteiliges angegeben ist.

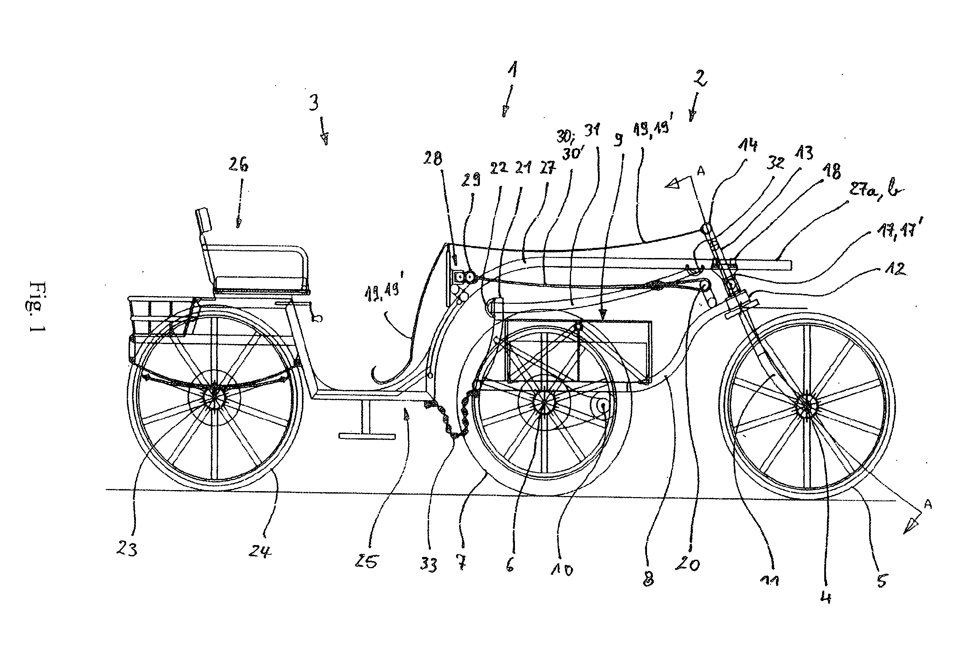

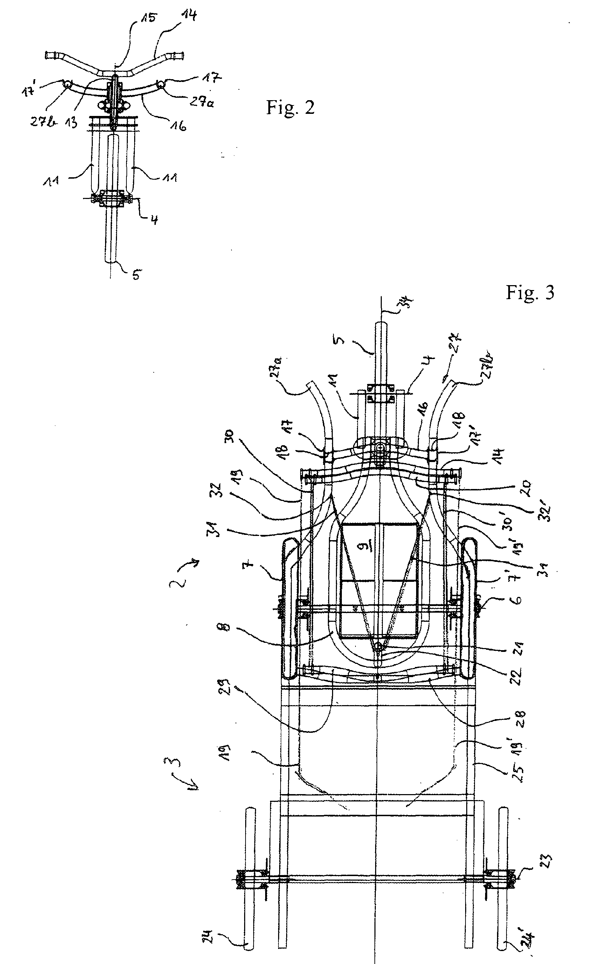

Die Beschreibung erfolgt mit Bezugnahme auf die Figuren 1, 2 und 3. In Fig. 1 ist eine schematische Seitenansicht eines ersten Ausführungsbeispiels eines erfindungsgemäßen Motorkutschengespanns 1 dargestellt. Fig. 2 zeigt eine Schnittansicht gemäß Linie A-A nach Fig. 1, und Fig. 3 illustriert eine Draufsicht des ersten Ausführungsbeispiels nach Fig. 1.

Das Motorkutschengespann 1 besteht in diesem Beispiel aus einem Zugfahrzeug 2 und einem einachsigen Kutschanhänger 3 mit einer Kutschanhängerachse 23.

Das Zugfahrzeug 2 ist in diesem Beispiel als ein Dreirad mit einer von einem Antrieb 10 angetriebenen Antriebsachse 6 und einer lenkbaren Vorderachse 4 ausgebildet. Der Antrieb 10 ist hier als Elektromotor angedeutet, der die Antriebsachse 6 über eine Kette 6a antreibt. Andere Antriebsarten sind selbstverständlich möglich. Ein Rahmen 8 trägt in seinem hinteren Bereich die Antriebsachse 6 mit zwei an deren Enden drehbar angebrachten Antriebsrädern 7, 7'. Über der Antriebsachse 6 ist auf dem Rahmen 8 ein Aufbau 9 angeordnet, in welchem sich zum Beispiel eine Steuerung und ein elektrischer Energiespeicher, d.h. Akkumulator, für den elektrischen Antrieb 10 befindet. Im Falle eines Verbrennungsmotors kann hier ein Kraftstofftank angeordnet sein.

Der Rahmen 8 ist in diesem Beispiel ein Stahlrohrrahmen (siehe Fig. 3), der im vorderen Bereich nach oben gebogen ist, wobei zwei Rohrabschnitte sich annähern und an ihren vorderen Enden ein Lenklager 12 tragen. Das Lenklager 12 dient zur drehbaren Lagerung einer Lenkwelle 13, die unten mit einer Gabel 11 versehen ist, welche die Vorderachse 4 mit entsprechenden Achslagern und mit einem Vorderrad 5 hält. Die Lenkwelle 13 ist in dem Lenklager 12 um eine Lenkachse 15 drehbar, welche nach hinten zum Boden geneigt angeordnet ist. Die Lenkwelle 13 ist an ihrem oberen Ende mit einem Lenker 14 verbunden (siehe Fig. 2 und 3). An den Enden des Lenkers 14 ist jeweils ein Lenkzugmittel 19, 19' angebracht, welche sich nach hinten in den angekoppelten Kutschenanhänger 3 erstrecken, der weiter unten noch ausführlicher beschrieben wird.

Beiderseits der Lenkwelle 13 sind am Rahmen 8 des Zugfahrzeugs Führungen 17, 17' an den Enden eines Führungsträgers 16 angeordnet. Diese Führungen 17, 17' dienen zur verschiebbaren Halterung von vorderen Abschnitten von Scherenholmen 27a, 27b einer Schere 27 oder auch Deichsel des Kutschenanhängers 3. Die Führungen 17, 17' sind in einem bestimmten Abstand zu einer Längsrichtung 34 (Fig. 3) des Motorkutschengespanns 1 angeordnet, wobei der Führungsträger 16 rechtwinklig zur Längsrichtung 34 befestigt ist. Die Führungen 17, 17' weisen korrespondierende Innenflächen zum Querschnitt der Scherenholme 27a, 27b auf, zum Beispiel kreisrunde Querschnitte. Es ist auch möglich, dass der Innenquerschnitt der Führungen 17, 17' rechteckig und oben offen ist, wobei die Reibung verringert ist. Die nach oben offenen Führungen 17, 17' sind durch Sicherungsbügel 18, zum Beispiel Schraubbolzen, so gesichert, dass sich die Scherenholme 27a, 27b nicht nach oben aus den Führungen 17, 17' herausbewegen können. Zum Beispiel bei Kurvenfahrten und unebenen Untergrund können die Scherenholme 27a, 27b in den Führungen 17, 17' gleitend Relativbewegungen ausführen. Die Führungen 17, 17' können auch um ihre Hochachse schwenkbar am Rahmen bzw. auf dem Führungsträger 16 angebracht sein.

Bei dem hier dargestellten Beispiel des einachsigen Kutschanhängers 3 stützt sich dieser mit den Scherenholmen 27a, 27b auf dem Zugfahrzeug 2 über die Führungen 17, 17' und den Führungsträger 16 ab, so dass ein stabiler Stand des einachsigen Kutschanhängers 3 erzielt wird, wie es bei einem eingespannten Pferd auch der Fall ist.

Weiterhin ist parallel zum Führungsträger 16 ein Zugarm 20 mit etwas geringerer Länge in Bezug auf den Führungsträger 16 am Rahmen 8 des Zugfahrzeugs 2 befestigt. An den Enden dieses Zugarms 20 sind Zugmittel 30, 30' angelenkt, welche mit ihren anderen Enden an einer Spielwaage 29 am Kutschanhänger 3 angebracht sind. Die Zugmittel 30, 30' dienen zur Übertragung von Zugkräften von dem Zugfahrzeug 2 auf den Kutschanhänger 3 bei Vorwärtsfahrt. Die Zugmittel 30, 30' sind Gurte, beispielsweise Flachgurte aus Leder.

Zur Ermöglichung einer Übertragung von Bremskräften beim Abbremsen des Zugfahrzeugs 2 und/oder bei Rückwärtsfahrt ist ein Bremszugmittel 31 angeordnet. Das Bremszugmittel 31 ist hier ebenfalls ein Flachgurt, welcher mit jeweils einem Ende an einer jeweiligen Bremszugmittelbefestigung 32, 32' an einem Scherenholm 27a, 27b, in diesem Beispiel in der Nähe der Führungen 17, 17', angelenkt ist. Dabei ist das Bremszugmittel nach hinten geführt, wobei ein mittlerer Abschnitt des Bremszugmittels 31 eine Stütze 21, die am Rahmen 8 des Zugfahrzeugs 2 befestigt ist, teilweise umschlingt (Fig. 1 und 2). Dieser Umschlingungsabschnitt im oberen Bereich der Stütze 21 ist mit einem Bügel 22 (Fig. 1) gegen Abrutschen des Bremszugmittels 31 gesichert. Wenn zum Beispiel bei einem Bremsvorgang des Zugfahrzeugs 2 der Kutschanhänger 3 aufläuft, übertragen die Zugmittel 30, 30' keine Kräfte, da sie nur Kräfte in Vorwärtsrichtung übertragen. In diesem Fall wird der Kutschanhänger 3 gebremst, indem eine Kraftübertragung von den Scherenholmen 27a, 27b über die Bremszugmittelbefestigungen 32, 32' durch das Bremszugmittel 31 auf beiden Seiten in die mit dem Rahmen 8 des Zugfahrzeugs 2 fest verbundene Stütze 21 erfolgt.

Im Fall eines Rückwärtsfahrens überträgt die Stütze 21 eine Zugkraft über das Bremszugmittel 31 auf die Bremszugmittelbefestigungen 32, 32' in die Scherenholme 27a, 27b und somit auf den Kutschanhänger 3.

Der Kutschanhänger 3 weist einen Kutschanhängerrahmen 25 auf, welcher über eine Federung die einzige Kutschanhängerachse 23 mit an beiden Enden drehbar gelagerten Kutschanhängerrädern 24, 24' trägt. Über dieser Achse 23 ist ein Aufbau 26 mit einem Sitz angeordnet. Der Rahmen 25 weist vor dem Sitz eine Vertiefung für die Beine der im Sitz befindlichen Person(en) auf, die über eine Stufe von außen erreichbar ist. Nach vorne hin geht der Rahmen 25 in die Schere 27 und deren Scherenholme 27a, 27b über. Der Rahmen 25 ist in diesem vorderen Bereich in diesem Beispiel entsprechend den Antriebsrädern 7, 7' des Zugfahrzeugs 2 ausgerundet und hier durchgehend gegen Schmutz und Spritzwasser verschlossen. In einem oberen Abschnitt etwa in Höhe des Sitzes ist die Spielwaage 29 an einem Waagenträger 28 angelenkt. Der Waagenträger 28 ist mit dem Rahmen 25 und somit mit dem Kutschanhänger 3 verbunden. An der Spielwaage 29 sind an deren beiden Enden die Zugmittel 30, 30' angelenkt (siehe Fig. 1 und 3).

Zusätzlich sind Kutschanhänger 3 und Zugfahrzeug 2 noch über eine oder mehrere Sicherungsmittel 33, zum Beispiel Ketten, verbunden. Diese Sicherungsmittel 33 sind so ausgebildet, dass sie ein Kurvenfahren ermöglichen und bei einer eventuellen Entkopplung von Zugfahrzeug 2 und Kutschanhänger 3 eine Notverbindung und somit Stützung des einachsigen Kutschanhängers 3 aufrecht erhalten.

Die Lenkmittel 19, 19' sind hier in ihrer Länge so ausgelegt, dass sie über die Mitte des Kutschanhängers 3 hinausgehen und von einer Person im Sitz zur Lenkung des Lenkers 14 bequem ergriffen und benutzt werden können. Sie sind hier zum Beispiel in Führungen am Rahmen 25 im Bereich des Waagenträgers 28 geführt.

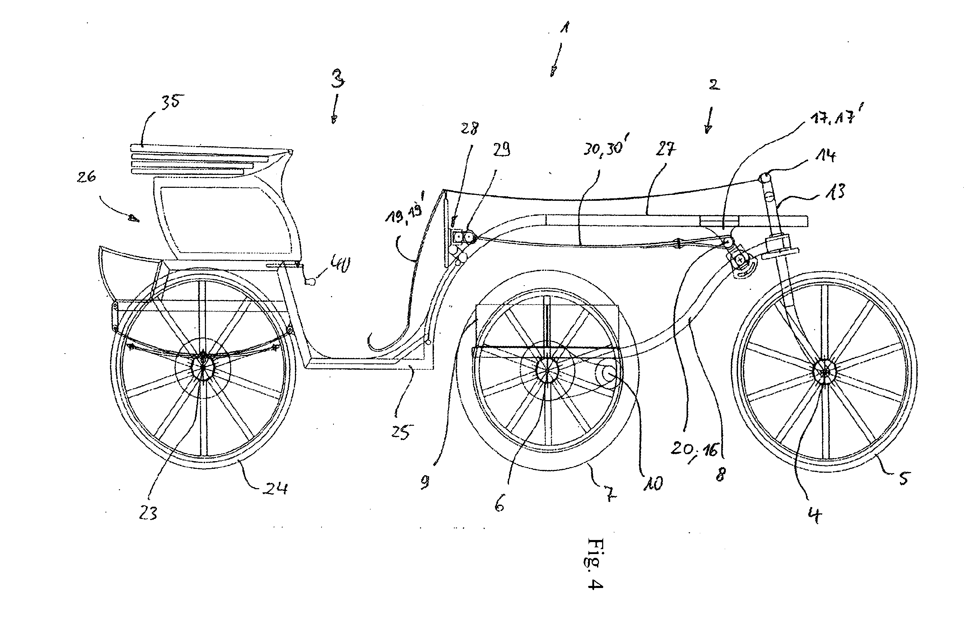

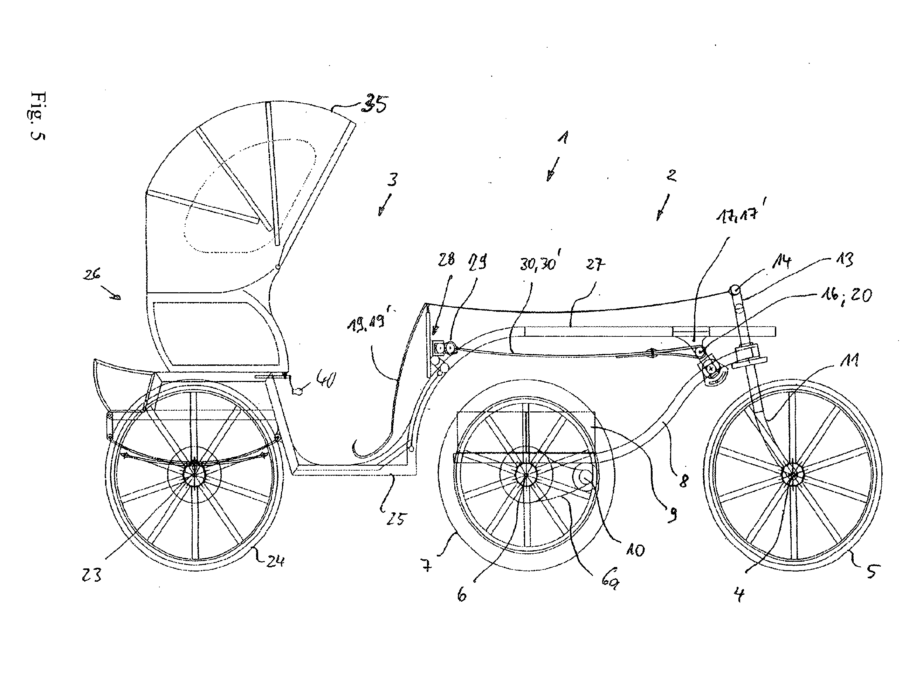

Fig. 4 illustriert eine schematische Seitenansicht eines zweiten Ausführungsbeispiels des erfindungsgemäßen Motorkutschengespanns 1 mit einem offenen Verdeck 35, welches durch eine Kurbel 40 unterhalb des Sitzes verstellbar ist. Fig. 5 zeigt die Ansicht mit geschlossenem Verdeck 26.

Dieses zweite Ausführungsbeispiel unterscheidet sich von dem ersten darin, dass der Führungsträger 16 und der Zugarm 20 einstückig ausgebildet sind, wobei die Zugmittel 30, 30' praktisch am Führungsträger 16 mit entsprechenden Befestigungen angebracht sind.

Obwohl die vorliegende Erfindung anhand bevorzugter Ausführungsbeispiele vorliegend beschrieben wurde, ist sie darauf nicht beschränkt, sondern auf vielfältige Weise kombinierbar und modifizierbar.

Beispielsweise können die Bremszugmittelbefestigungen 32, 32' der Enden des Bremszugmittels 31 im hinteren Bereich der Scherenholme 27a, 27b angeordnet sein, wobei die Stütze 21 dann in Fahrtrichtung vor diesen Bremszugmittelbefestigungen 32, 32' am Rahmen 8 des Zugfahrzeugs 2 fest angebracht ist.

Je nach Leistungsbedarf können auch mehr Antriebe 10 vorgesehen sein. Der Antrieb 10 kann zum Beispiel auch zwei Abtriebswellen und somit zwei Kettengetriebe zur Antriebswelle aufweisen. Selbstverständlich sind auch weitere Getriebe wie zum Beispiel Differenzialausgleichgetriebe oder einzeln angetriebene Antriebsräder 7, 7' möglich.

Die Schere 27 kann auch einen klappbare Deichsel mit einem oder mehreren Holmen sein. Dementsprechend sind Führungen 17, 17' an dem Zugfahrzeug 2 angepasst.

Der Kutschanhänger 3 kann auch zwei Achsen aufweisen, wobei zum Beispiel seine vordere Achse mit einer Deichsel lenkbar ist (z.B. Drehschemel).

Es ist auch denkbar, dass die lenkbare Vorderachse 4 zwei Vorderräder 5 dicht nebeneinander, in einem Abstand, der demjenigen der Antriebsräder 7, 7' entspricht, oder in einem anderen Abstand aufweist.

Die lenkbare Vorderachse 4 kann dabei als Starrachse ausgebildet sein, wobei auch lenkbare Achsschenkel möglich sind.

Bei einer bevorzugten Ausführungsform ist das Motorkutschengespann dadurch gekennzeichnet, dass die lenkbare Vorderachse des Zugfahrzeugs mit einem Lenker gekoppelt ist, an dessen Enden jeweils zumindest ein Lenkzugmittel befestigt ist, wobei sich das jeweils zumindest eine Lenkzugmittel zum Kutschanhänger hin bis über dessen Mitte hinaus erstreckt.

Bei einer weiteren bevorzugten Ausführungsform ist das Motorkutschengespann dadurch gekennzeichnet, dass die zumindest zwei Zugmittel und/oder das zumindest eine Bremszugmittel als Gurte ausgebildet sind.

Bei einer weiteren bevorzugten Ausführungsform ist das Motorkutschengespann dadurch gekennzeichnet, dass der zumindest eine Antrieb ein Elektromotor und/oder ein Verbrennungsmotor mit Getriebe ist.

Bei einer weiteren bevorzugten Ausführungsform ist das Motorkutschengespann dadurch gekennzeichnet, dass der Antrieb vom Kutschanhänger über Steuermittel steuerbar ausgebildet ist.

Bei einer weiteren bevorzugten Ausführungsform ist das Motorkutschengespann dadurch gekennzeichnet, dass das Zugfahrzeug als Dreirad ausgebildet ist.

Bei einer weiteren bevorzugten Ausführungsform ist das Motorkutschengespann dadurch gekennzeichnet, dass die Spielwaage eine Länge aufweist, die zumindest drei Viertel einer Breite des Kutschanhängers beträgt.

## Patentansprüche

1. Motorkutschengespann (1) mit einem Zugfahrzeug (2), welches eine lenkbaren Vorderachse (4) und eine Antriebsachse (6) mit zumindest einem Antrieb (10) aufweist, und einem mit dem Zugfahrzeug (2) gekoppelten Kutschanhänger (3) mit zumindest einer Anhängerachse (23),
**dadurch gekennzeichnet,**
**dass** der Kutschanhänger (3) mit dem Zugfahrzeug (2) durch zumindest zwei Zugmittel (30, 30') zur Kraftübertragung in Fahrtrichtung, durch zumindest ein Bremszugmittel (31) zur Kraftübertragung in entgegengesetzter Fahrtrichtung, und mit einer Schere (27), die zumindest einen Scherenholm (27a, 27b) aufweist, zur Führung gekoppelt ist.

2. Motorkutschengespann (1) nach Anspruch 1,
**dadurch gekennzeichnet,**
**dass** die zumindest zwei Zugmittel (30, 30') über eine Spielwaage (29) am Kutschanhänger (3) befestigt sind.

3. Motorkutschengespann (1) nach Anspruch 2,
**dadurch gekennzeichnet,**
**dass** die zumindest zwei Zugmittel (30, 30') von einander in einem Abstand, welcher der Länge der Spielwaage (29) entspricht, in etwa parallel zur Längsachse des Motorkutschengespanns (1) angeordnet sind.

4. Motorkutschengespann (1) nach Anspruch 3,
**dadurch gekennzeichnet,**
**dass** die zumindest zwei Zugmittel (30, 30') jeweils an einem Ende einer Zugtraverse (20) an einem Rahmen (8) des Zugfahrzeugs (2) befestigt sind, wobei die Zugtraverse (20) in etwa die Länge der Spielwaage (29) aufweist.

5. Motorkutschengespann (1) nach zumindest einem der vorhergehenden Ansprüche,
**dadurch gekennzeichnet,**
**dass** zumindest ein Scherenholm (27a, 27b) in zumindest einer Führung (17, 17') am Zugfahrzeug (2) verschiebbar gehalten ist.

6. Motorkutschengespann (1) nach Anspruch 5,
**dadurch gekennzeichnet,**
**dass** die zumindest eine Führung (17, 17') in einem Abstand zu einer Längsrichtung (34) des Motorkutschengespanns (1) über einen Führungsträger (16) am Zugfahrzeug (2) angebracht ist.

7. Motorkutschengespann (1) nach Anspruch 6,
**dadurch gekennzeichnet,**
**dass** die zumindest zwei Zugmittel (30, 30') an dem Führungsträger (16) angebracht sind.

8. Motorkutschengespann (1) nach zumindest einem der vorhergehenden Ansprüche,
**dadurch gekennzeichnet,**
**dass** das zumindest eine Bremszugmittel (31) an zumindest einem Scherenholm (27a, 27b) der Schere (27) und an dem Zugfahrzeug (2) angebracht ist.

9. Motorkutschengespann (1) nach Anspruch 8,
**dadurch gekennzeichnet,**
**dass** das zumindest eine Bremszugmittel (31) mit einem Ende an einem Scherenholm (27a) und mit dem anderen Ende an dem anderen Scherenholm (27b) angebracht ist, wobei ein mittlerer Abschnitt des zumindest einen Bremszugmittels (31) mit einer Stütze (21) des Zugfahrzeugs (2) in Kontakt steht.

10. Motorkutschengespann (1) nach zumindest einem der vorhergehenden Ansprüche,
**dadurch gekennzeichnet,**
**dass** das Zugfahrzeug (2) und der Kutschanhänger (3) eine Kopplung mit einem Sicherungsmittel (33) aufweisen.

11. Zugfahrzeug (2) für ein Motorkutschengespann nach wenigstens einem der vorangehenden Ansprüche, mit einer Schere (27) oder einer Deichsel, mit:
einem Rahmen (8) mit einer Vorderachse (4) und einer Hinterachse (6), wobei die Vorderachse (4) oder/und die Hinterachse (6) lenkbar ist/sind;
zumindest einem Lenker (14), an dessen Enden jeweils ein Lenkzugmittel (19, 19') angebracht ist;
zumindest zwei Zugmittel (30, 30'), welche an dem Rahmen (8) zur Kraftübertragung auf eine zuzuordnende Kutsche in Fahrtrichtung angebracht sind;
zumindest ein Bremszugmittel (31) zur Kraftübertragung von dem zuzuordnenden Kutschanhänger (3) in entgegen gesetzter Fahrtrichtung;
zumindest einem Kontaktabschnitt zur Zusammenwirkung mit dem zumindest einen Bremszugmittel (31);
zumindest einer Führung (17, 17') zur Kopplung mit einer zuzuordnende Schere (27) und
zu deren verschiebbaren Halterung; und
mit zumindest einem Antrieb (10), welcher mit zumindest einer der Achsen (4, 6) zum Antrieb des Zugfahrzeugs (2) zusammenwirkt.

12. Zugfahrzeug (2) nach Anspruch 11,
**dadurch gekennzeichnet,**
**dass** die zumindest eine Führung (17, 17') in einem Abstand zu einer Längsrichtung (34) über einen Führungsträger (16) am Zugfahrzeug (2) angebracht ist.

13. Zugfahrzeug (2) nach Anspruch 12,
**dadurch gekennzeichnet,**
**dass** die zumindest zwei Zugmittel (30, 30') an dem Führungsträger (16) angebracht sind.

14. Zugfahrzeug (2) nach zumindest einem der Ansprüche 11 bis 13,
**dadurch gekennzeichnet,**
**dass** der Antrieb (10) ein Elektromotor oder/und ein Verbrennungsmotor mit Getriebe ist.

15. Zugfahrzeug (2) nach zumindest einem der Ansprüche 11 bis 14,
**dadurch gekennzeichnet,**
**dass** das Zugfahrzeug (2) als Dreirad ausgebildet ist.

## Claims

1. Motorised carriage set (1) having a drawing vehicle (2) which comprises a steerable front axle (4) and a drive axle (6) having at least one drive (10), and having a carriage trailer (3) which is coupled to the drawing vehicle (2) and has at least one trailer axle (23), **characterised in that** the carriage trailer (3) is coupled to the drawing vehicle (2) by means of at least two pulling means (30, 30') for transmitting force in the direction of travel, by means of at least one brake pulling means (31) for transmitting force in the opposite direction of travel, and to shafts (27), which comprise at least one shaft bar (27a, 27b), for guidance purposes.

2. Motorised carriage set (1) as claimed in claim 1, **characterised in that** the at least two pulling means (30, 30') are secured to the carriage trailer (3) by means of a balance bar (29).

3. Motorised carriage set (1) as claimed in claim 2, **characterised in that** the at least two pulling means (30, 30') are disposed apart from one another at a spaced interval, which corresponds to the length of the balance bar (29), approximately in parallel with the longitudinal axis of the motorised carriage set (1).

4. Motorised carriage set (1) as claimed in claim 3, **characterised in that** the at least two pulling means (30, 30') are each secured to one end of a pulling crossbar (20) on a frame (8) of the drawing vehicle (2), wherein the pulling crossbar (20) comprises approximately the length of the balance bar (29).

5. Motorised carriage set (1) as claimed in at least one of the preceding claims, **characterised in that** at least one shaft bar (27a, 27b) is held in a displaceable manner in at least one guide (17, 17') on the drawing vehicle (2).

6. Motorised carriage set (1) as claimed in claim 5, **characterised in that** the at least one guide (17, 17') is attached by means of a guide carrier (16) to the drawing vehicle (2) at a spaced interval with respect to a longitudinal direction (34) of the motorised carriage set (1).

7. Motorised carriage set (1) as claimed in claim 6, **characterised in that** the at least two pulling means (30, 30') are attached to the guide carrier (16).

8. Motorised carriage set (1) as claimed in at least one of the preceding claims, **characterised in that** the at least one brake pulling means (31) is attached to at least one shaft bar (27a, 27b) of the shafts (27) and to the drawing vehicle (2).

9. Motorised carriage set (1) as claimed in claim 8, **characterised in that** the at least one brake pulling means (31) is attached with one end to one shaft bar (27a) and with the other end to the other shaft bar (27b), wherein a central portion of the at least one brake pulling means (31) is in contact with a support (21) of the drawing vehicle (2).

10. Motorised carriage set (1) as claimed in at least one of the preceding claims, **characterised in that** the drawing vehicle (2) and the carriage trailer (3) comprise a coupling with a locking means (33).

11. Drawing vehicle (2) for a motorised carriage set as claimed in at least one of the preceding claims, having shafts (27) or a drawbar, having:
- a frame (8) having a front axle (4) and a rear axle (6), wherein the front axle (4) and/or the rear axle (6) is/are steerable;
- at least one control lever (14), to the ends of which a respective steering pulling means (19, 19') is attached;
- at least two pulling means (30, 30') which are attached to the frame (8) for transmitting force to a carriage, which is to be allocated thereto, in the direction of travel;
- at least one brake pulling means (31) for transmitting force from the carriage trailer (3), which is to be allocated thereto, in the opposite direction of travel;
- at least one contact portion for cooperating with the at least one brake pulling means (31);
- at least one guide (17, 17') for coupling to shafts (27), which are to be allocated thereto, and for displaceable retention thereof; and
- having at least one drive (10) which cooperates with at least one of the axles (4, 6) for driving the drawing vehicle (2).

12. Drawing vehicle (2) as claimed in claim 11, **characterised in that** the at least one guide (17, 17') is attached by means of a guide carrier (16) to the drawing vehicle (2) at a spaced interval with respect to a longitudinal direction (34).

13. Drawing vehicle (2) as claimed in claim 12, **characterised in that** the at least two pulling means (30, 30') are attached to the guide carrier (16).

14. Drawing vehicle (2) as claimed in at least one of claims 11 to 13, **characterised in that** the drive (10) is an electromotor and/or a combustion engine with a transmission.

15. Drawing vehicle (2) as claimed in at least one of claims 11 to 14, **characterised in that** the drawing vehicle (2) is formed as a three wheeler.

## Revendications

1. Ensemble carrosse à moteur (1) comprenant un véhicule de traction (2), qui présente un essieu avant dirigeable (4) et un essieu moteur (6) doté d'au moins un entraînement (10), et une remorque de carrosse (3) accouplée au véhicule de traction (2) et dotée d'au moins un essieu de remorque (23), **caractérisé en ce que**
la remorque de carrosse (3) est accouplée au véhicule de traction (2) par au moins deux moyens de traction (30, 30') permettant une transmission de force dans le sens de marche, par au moins un moyen de serrage de frein (31) permettant une transmission de force dans le sens de marche opposé et à l'aide d'un brancard (27), qui présente au moins un limon (27a, 27b), en vue du guidage.

2. Ensemble carrosse à moteur (1) selon la revendication 1, **caractérisé en ce que** les au moins deux moyens de traction (30, 30') sont fixés à la remorque de carrosse (3) par le biais d'une balance (29).

3. Ensemble carrosse à moteur (1) selon la revendication 2, **caractérisé en ce que** les au moins deux moyens de traction (30, 30') sont disposés approximativement parallèlement à l'axe longitudinal de l'ensemble carrosse à moteur (1) à une distance l'un de l'autre qui correspond à la longueur de la balance réglable (29).

4. Ensemble carrosse à moteur (1) selon la revendication 3, **caractérisé en ce que** les au moins deux moyens de traction (30, 30') sont chacun fixés à un châssis (8) du véhicule de traction (2) à une extrémité d'une traverse de traction (20), la traverse de traction (20) présentant approximativement la longueur de la balance réglable (29).

5. Ensemble carrosse à moteur (1) selon au moins une des revendications précédentes, **caractérisé en ce que** au moins un limon (27a, 27b) est fixé de façon coulissante dans au moins un guidage (17, 17') du véhicule de traction (2).

6. Ensemble carrosse à moteur (1) selon la revendication 5, **caractérisé en ce que** le au moins un guidage (17, 17e) est fixé au véhicule de traction (2) par le biais d'un support de guidage (16) à une certaine distance par rapport à un axe longitudinal (34) de l'ensemble carrosse à moteur (1).

7. Ensemble carrosse à moteur (1) selon la revendication 6, **caractérisé en ce que** les au moins deux moyens de traction (30, 30') sont fixés au support de guidage (16).

8. Ensemble carrosse à moteur (1) selon au moins une des revendications précédentes, **caractérisé en ce que** le au moins un moyen de serrage de frein (31) est fixé à au moins un limon (27a, 27b) du brancard (27) et au véhicule de traction (2).

9. Ensemble carrosse à moteur (1) selon la revendication 8, **caractérisé en ce que** le au moins un moyen de serrage de frein (31) est fixé à un limon 27a) avec une première extrémité et à un autre limon (27b) avec l'autre extrémité, une section centrale du au moins un moyen de serrage de frein (31) étant en contact avec un support (21) du véhicule de traction (2).

10. Ensemble carrosse à moteur (1) selon au moins une des revendications précédentes, **caractérisé en ce que** le véhicule de traction (2) et la remorque de carrosse (3) présentent un accouplement avec un moyen d'arrêt (33).

11. Véhicule de traction (2) pour un ensemble carrosse à moteur selon au moins une des revendications précédentes, doté d'un brancard (27) ou d'un timon, comprenant :
- un châssis (8) présentant un essieu avant (4) et un essieu arrière (6), l'essieu avant (4) et/ou l'essieu arrière (6) pouvant être dirigé/s ;
- au moins une bielle (14), à chacune des extrémités de laquelle est fixé un moyen de traction-guidage (19, 19') ;
- au moins deux moyens de traction (30, 30'), qui sont fixés au châssis (8) permettant une transmission de force à un carrosse à associer dans le sens de marche ;
- au moins un moyen de serrage de frein (31) permettant une transmission de force de la remorque de carrosse (3) à associer dans le sens de marche opposé ;
- au moins une section de contact permettant une coopération avec le au moins un moyen de serrage de frein (31) ;
- au moins un guidage (17, 17') permettant un accouplement avec un brancard (27) à associer et la fixation coulissante de celui-ci ; et
- au moins un entraînement (10), qui coopère avec au moins un des essieux (4, 6) pour entraîner le véhicule de traction (2).

12. Véhicule de traction (2) selon la revendication 11, **caractérisé en ce que** le au moins un guidage (17, 17') est fixé au véhicule de traction (2) par le biais d'un support de guidage (16) à une certaine distance par rapport à un axe longitudinal (34).

13. Véhicule de traction (2) selon la revendication 12, **caractérisé en ce que** les au moins deux moyens de traction (30, 30') sont fixés au support de guidage (16).

14. Véhicule de traction (2) selon au moins une des revendications 11 à 13, **caractérisé en ce que** l'entraînement (10) est un moteur électrique et/ou un moteur à combustion à engrenage.

15. Véhicule de traction (2) selon au moins une des revendications 11 à 14, **caractérisé en ce que** le véhicule de traction (2) est conçu sous forme de tricycle.
